# EUROPÄISCHE PATENTSCHRIFT

(11) **EP 3 543 402 B1**
(45) Veröffentlichungstag und Bekanntmachung des Hinweises auf die Patenterteilung: **05.03.2025**
(21) Anmeldenummer: 18162455.2
(22) Anmeldetag: 19.03.2018
(51) Int. Cl.: E01C 19/48, G05B 19/409, G06F 3/01, G06F 3/0481, G02B 27/01, G06F 3/0484

(54) **BAUMASCHINE ZUM ERSTELLEN ODER BEARBEITEN EINER STRASSE**
CONSTRUCTION MACHINE FOR CONSTRUCTING OR PROCESSING OF A STREET
ENGIN DE CONSTRUCTION PERMETTANT DE CONSTRUIRE OU DE TRAVAILLER UNE ROUTE

(43) Veröffentlichungstag der Anmeldung: 25.09.2019
(73) Patentinhaber: Joseph Vögele AG, 67067 Ludwigshafen (DE)
(72) Erfinder: BUSCHMANN, Martin, 67435 Neustadt (DE)
(74) Vertreter: Grünecker Patent- und Rechtsanwälte PartG mbB

(56) Entgegenhaltungen:
- WO-A1-2015/168716
- DE-A1- 102014 018 533
- DE-A1- 102015 204 181
- DE-U1- 9 402 324
- US-A1- 2014 188 333
- US-A1- 2015 063 907
- US-A1- 2015 197 900

## Beschreibung

Die vorliegende Erfindung betrifft eine Baumaschine zum Erstellen und/oder Bearbeiten einer Straße, wie beispielsweise einen Straßenfertiger gemäß Anspruch 1, sowie ein Verfahren zum Anzeigen von Betriebsparametern einer Baumaschine zum Erstellen und/oder Bearbeiten einer Straße gemäß Anspruch 7.

### Stand der Technik

Baumaschinen zum Erstellen oder Bearbeiten von Straßen sind aus dem Stand der Technik hinreichend bekannt. Dabei kann es sich beispielsweise um Straßenfertiger handeln, die ein Material, wie beispielsweise Asphalt, auf die Straße ausbringen und andrücken können. Auch Verdichter, die in Bewegungsrichtung einem Straßenfertiger üblicherweise folgen, sind solche Baumaschinen. Ebenso zählen hierzu Beschickerfahrzeuge, die einen Straßenfertiger mit einer Asphaltmischung oder anderem Material zum Straßenbau beschicken können. Auch Kombinationen dieser Fahrzeuge können als Baumaschine verstanden werden.

Beim Betrieb dieser Baumaschinen fallen eine Vielzahl von Informationen mit Hinblick auf die Umgebung aber auch mit Hinblick auf den Betrieb der Baumaschine an.

Am Beispiel des Straßenfertigers fallen beispielsweise Informationen mit Hinblick auf die Position des Straßenfertigers relativ zur Begrenzung der Straße an. Darüber hinaus können Informationen bezüglich der Umgebungstemperatur oder Luftfeuchte relevant werden. Von großer Wichtigkeit ist die Temperatur des Straßenbelags vor dem Straßenfertiger und hinter dem Straßenfertiger. Damit zusammen hängt auch die Temperatur, die in dem Gutbunker des Straßenfertigers herrscht, bzw. die Temperatur, die das Einbaumaterial (Asphaltmischung oder Ähnliches) im Gutbunker besitzt.

Relevant können auch Betriebsparameter sein, die den Zustand der Baumaschine betreffen. So ist beispielsweise für den Betrieb des Straßenfertigers wichtig, den Anstellwinkel oder die Höhe der Einbaubohle und damit die Einstellung der Nivellierzylinder zu kennen. Auch die Transportgeschwindigkeit der Kratzbänder, die Material aus dem Gutbunker der Verteilerschnecke zuführen, können relevant sein. Ebenso sind andere Größen für den Fahrer des Straßenfertigers möglicherweise von Interesse.

Eine Vielzahl dieser Daten fällt bereits beim Betrieb der Baumaschine an und wird zu Analysezwecken häufig gespeichert und gegebenenfalls zu einem späteren Zeitpunkt ausgewertet. Es ist auch bekannt, zum Beispiel für die Heizung der Einbaubohle Überwachungseinrichtungen vorzusehen, die den aktuellen Betriebszustand (Heizung eingeschaltet oder nicht) ausgeben können.

Ferner ist aus der US 2015/0063907 A1 ein Verfahren zum Betrieb einer Maschine mit wenigstens einem Arbeitsgerät bekannt, wobei eine Reihe von Feedback-Geräten vorgesehen ist, die Informationen über die Einstellung des Arbeitsgeräts erfassen und verfolgen können.

Aus der DE 94 02 324 U1 ist ein Straßenfertiger bekannt, mit einer Einrichtung zum Überwachen und Anzeigen von Parametern der Beschickung mit Einbaumaterial.

Die Vielzahl eintreffender Daten aus der Umgebung und auch von unterschiedlichen Arbeitsgeräten der Baumaschine sind für einen Bediener üblicherweise nicht zugänglich und, wenn doch, nur schwer zu verarbeiten. Insbesondere besteht die Gefahr, dass ein Fahrer der Baumaschine durch die Vielzahl möglicher eintreffender Informationen oder Daten vom eigentlichen Betrieb der Baumaschine und insbesondere vom Fahren der Baumaschine abgelenkt wird, was das Unfallrisiko erhöhen kann.

### Aufgabe

Ausgehend vom bekannten Stand der Technik besteht die zu lösende Aufgabe somit darin, eine Baumaschine und ein Verfahren zum Anzeigen von Betriebsparametern der Baumaschine anzugeben, das es dem Fahrer oder einem anderen Bediener ermöglicht, Informationen über verschiedenste Betriebsparameter der Baumaschine in möglichst einfacher und verständlicher Weise zu erhalten und so eine korrekte Ausführung der Straßenarbeiten zu realisieren, das Unfallrisiko jedoch zu minimieren.

### Lösung

Diese Aufgabe wird erfindungsgemäß durch die Baumaschine zum Erstellen oder Bearbeiten einer Straße gemäß Anspruch 1 oder das Verfahren zum Anzeigen von Betriebsparametern einer Baumaschine gemäß Anspruch 7 gelöst. Vorteilhafte Weiterbildungen der Erfindung sind in den Unteransprüchen erfasst.

Die erfindungsgemäße Baumaschine zum Erstellen und/oder Bearbeiten einer Straße, wie beispielsweise ein Straßenfertiger, umfasst wenigstens ein Arbeitsgerät, eine Anzeigeeinrichtung und eine Mehrzahl von Sensoren, wobei jeder Sensor zum Messen eines Wertes eines Betriebsparameters der Baumaschine ausgebildet ist, wobei die Sensoren Daten entsprechend der gemessenen Werte an die Anzeigeeinrichtung ausgeben können und die Anzeigeeinrichtung ausgebildet ist, eine Darstellung zumindest eines Teils der Baumaschine zusammen mit den gemessenen Werten der Betriebsparameter auszugeben.

Unter dem Arbeitsgerät der Baumaschine ist eine Einrichtung zu verstehen, die für das Erstellen und/oder das Bearbeiten einer Straße verwendet wird. Dazu zählt beispielsweise die Bohle eines Straßenfertigers aber auch der Gutbunker, in dem das Material für den Straßenbau vorgehalten wird. Auch andere Einrichtungen, wie beispielsweise der Antrieb der Baumaschine fallen hierunter.

Die Mehrzahl von Sensoren umfasst wenigstens zwei Sensoren, die dann bevorzugt zwei unterschiedliche Betriebsparameter messen. Unter einem Betriebsparameter ist ein Wert oder eine Information zu verstehen, die für den Betrieb der Baumaschine oder des Arbeitsgeräts oder der Bewegung der Baumaschine charakteristisch ist oder Eigenschaften der Umgebung kennzeichnet. Dazu zählt beispielsweise die Geschwindigkeit und die Position der Arbeitsmaschine aber auch die Ausbringrate von Einbaumaterial für die Straße oder die Menge oder die Temperatur des im Gutbunker vorgehaltenen Einbaumaterials. Auch andere Betriebsparameter, wie beispielsweise die Temperatur (der Heizung) der Einbaubohle oder der Neigungswinkel der Einbaubohle, die Transportgeschwindigkeit der Kratzbänder oder Ähnliches zählen hierzu. Analog können auch andere Betriebsparameter beispielsweise eines Verdichters, der hinter dem Straßenfertiger fährt, oder eines Beschickerfahrzeugs (auch kurz Beschicker) zum Beschicken des Gutbunkers eines Straßenfertigers vorgesehen sein.

Die Baumaschine muss weiterhin nicht ein einziges Fahrzeug wie ein Straßenfertiger oder ein Beschickerfahrzeug sein, sondern kann auch ein Fahrzeugverbund sein, beispielsweise umfassend einen Straßenfertiger, einen dahinter fahrenden Verdichter und einen davor fahrenden Beschicker.

Die Anzeigeeinrichtung ist vorteilhaft an der Baumaschine angeordnet, muss mit dieser jedoch nicht fest verbunden sein.

Die Darstellung eines Teils der Baumaschine zusammen mit den gemessenen Werten der Betriebsparameter auf der Anzeigeeinrichtung ist hier so zu verstehen, dass zumindest zwei gemessene Betriebsparameter bzw. deren gemessene Werte zusammen mit einem Teil der Baumaschine angezeigt werden. Beispielsweise ist darunter zu verstehen, dass die Einbaubohle eines Straßenfertigers und der Anpressdruck der Einbaubohle oder ihr Neigungswinkel oder ihre Höhe zusammen mit der Einbaubohle auf der Anzeigeeinrichtung angezeigt werden.

Dies erlaubt dem Bediener, eine Vielzahl von Informationen, die für den Betrieb der Baumaschine und damit für die Bedienung der Baumaschine durch den Fahrer oder anderweitigen Bediener relevant sind, in einfacher und zentraler Weise zu erhalten. Damit wird die Zahl der vom Bediener zu überwachenden Instrumente reduziert und somit die Sicherheit im Straßenverkehr erhöht, während die Bedienung der Baumaschine erleichtert wird.

In einer Ausführungsform ist vorgesehen, dass die Baumaschine eine Kamera zum Aufnehmen einer Echtzeit-Darstellung zumindest eines Teils der Baumaschine und zum Übertragen der aufgenommenen Echtzeit-Darstellung an die Anzeigeeinrichtung umfasst. In dieser Ausführungsform wird also das von der Kamera permanent aufgenommene Bild zumindest des Teils der Baumaschine auf der Anzeigeeinrichtung angezeigt. Dies geschieht selbstverständlich erfindungsgemäß zusammen mit den Betriebsparametern. Der Bediener kann so nicht nur anhand der erhaltenen Messwerte der Betriebsparameter über den Zustand der Baumaschine informiert werden, sondern gleichzeitig mit Informationen versorgt werden, die für den Bediener zwar anhand der Echtzeit-Darstellung erkennbar sind, aber nur schwierig durch Sensoren erfasst werden können. Dies erleichtert den Betrieb der Baumaschine weiter.

Weiterhin kann vorgesehen sein, dass die Betriebsparameter wenigstens eines von der Bewegung der Baumaschine, der Funktion des Arbeitsgeräts, des Betriebsmodus des Arbeitsgeräts und/oder der Position der Baumaschine in der Umgebung angeben. Unter der Funktion des Arbeitsgeräts sind Werte zu verstehen, die das Arbeitsgerät in seinem Betrieb charakterisieren, wie beispielsweise die aktuelle Temperatur der Heizung oder der Einbaubohle oder die Geschwindigkeit, mit der ein Förderband dem Gutbunker Einbaumaterial zuführt oder die Geschwindigkeit, mit der die Kratzbänder Material aus dem Gutbunker entnehmen. Der Betriebsmodus des Arbeitsgeräts ist bevorzugt eine Eigenschaft, die ebenfalls dem Arbeitsgerät zugeordnet ist, aber üblicherweise über den Betrieb des Arbeitsgerätes statisch oder quasi-statisch ist. Beispielsweise stellt die Arbeitsbreite der Einbaubohle, die teilweise verstellbar ist, einen solchen, den Betriebsmodus des Arbeitsgeräts kennzeichnendem Betriebsparameter dar. Der Betriebsmodus kann auch eine Information darüber sein, ob das Arbeitsgerät überhaupt eingeschaltet ist. So kann beispielsweise ein der Heizung der Einbaubohle zugeordneter Betriebsparameter den Wert "an" oder "aus" annehmen, um zu kennzeichnen, ob die Heizung eingeschaltet ist (an) oder nicht (aus).

Es kann weiterhin vorgesehen sein, dass die gemessenen Werte der Betriebsparameter der Darstellung zumindest eines Teils der Baumaschine überlagert durch die Anzeigeeinrichtung dargestellt werden können. Dies bedeutet, dass bei der Darstellung zumindest des Teils der Baumaschine die entsprechenden Betriebsparameter über diese Darstellung gelegt werden, so dass eine kombinierte Darstellung aus der Darstellung zumindest des Teils der Baumaschine und den Betriebsparametern erfolgt. Diese Form der Darstellung kann auch als "Mixed Reality" oder "Augmented Reality" beschrieben werden. So kann der Bediener eine einfache Zuordnung der angezeigten Messwerte beispielsweise zu Arbeitsgeräten der Baumaschine vornehmen.

Es kann auch vorgesehen sein, dass die Anzeigeeinrichtung ausgebildet ist, zusätzlich zu den gemessenen Werten der Betriebsparameter zumindest einen Soll-Wert für zumindest einen der Betriebsparameter auszugeben. Dies kann insbesondere schwankende Betriebsparameter, wie die Temperatur des im Gutbunker vorgehaltenen Einbaumaterials betreffen. Hier kann eine Soll-Temperatur zusammen mit der Ist-Temperatur (dem aktuell gemessenen Wert) durch die Anzeigeeinrichtung ausgegeben werden, so dass der Bediener bzw. Fahrer der Baumaschine eventuell nachregeln kann. Die Bedienung der Baumaschine wird so weiter vereinfacht.

Darüber hinaus kann vorgesehen sein, dass die Baumaschine ein Straßenfertiger ist und das Arbeitsgerät wenigstens eines von dem Antrieb des Straßenfertigers, dem Gutbunker zum Aufnehmen von für den Straßenbau verwendetem Material, Kratzbändern zum Transportieren des Materials aus dem Gutbunker zu einer Verteilerschnecke, einer Einbaubohle, einer Heizung für die Einbaubohle oder ein Nivellierzylinder zum Einstellen des Anhängepunktes der Einbaubohle ist, wobei wenigstens ein Sensor zum Messen eines Betriebsparameters des Arbeitsgeräts vorgesehen ist. Die erfindungsgemäße Darstellung des Betriebsparameters zusammen mit einem Teil der Baumaschine kann eine vereinfachte und für den Bediener leicht verständliche Darstellung der Betriebsparameter der üblicherweise zum Einsatz kommenden Arbeitsgeräte erreichen.

Erfindungsgemäß umfasst die Anzeigeeinrichtung eine Virtual-Reality-Brille. Eine Virtual-Reality-Brille bietet den Vorteil, dass dem Bediener die gemessenen Werte angezeigt werden, während er sich weiterhin beispielsweise auf das Fahren der Baumaschine konzentrieren kann und nicht von der Straße auf ein gesondertes Display blicken muss. Dies erleichtert den Betrieb der Baumaschine und erhöht die Betriebssicherheit. Die Virtual-Reality-Brille umfasst Realisierungen in Form von Head-Mounted Displays und Datenbrillen, die je nach Zweckmäßigkeit gewählt werden können.

Erfindungsgemäß ist die Virtual-Reality-Brille ausgebildet, zumindest einen Betriebsparameter des Arbeitsgeräts anzuzeigen, wenn sich das Arbeitsgerät im Sichtfeld eines Bedieners der Baumaschine befindet. Blickt beispielsweise ein neben einem Straßenfertiger laufender Arbeiter auf die Einbaubohle des Straßenfertigers, können dem Bediener Informationen zu der Heizung oder der Einstellung der Nivellierzylinder, die gleichermaßen den Anhängepunkt der Einbaubohle bestimmen, angezeigt werden. Blickt dieser Bediener hingegen auf den Gutbunker, können ihm Informationen zu der Temperatur des Einbaumaterials und zur Transportgeschwindigkeit der Kratzbänder angezeigt werden. Durch diese Ausführungsform wird der Bediener mit den Informationen bzw. den Betriebsparametern versorgt, die das Arbeitsgerät betreffen, auf das er gerade blickt, so dass wahrscheinlich für den Bediener zurzeit nicht relevante Informationen ausgeblendet werden können.

Das erfindungsgemäße Verfahren zum Anzeigen von Betriebsparametern einer Baumaschine zum Erstellen oder Bearbeiten einer Straße, wie beispielsweise eines Straßenfertigers, umfasst, dass von einer Vielzahl von Sensoren jeweils ein Wert eines Betriebsparameters gemessen und dieser Wert an einer Anzeigeeinrichtung ausgegeben wird, wobei die Anzeigeeinrichtung eine Darstellung zumindest eines Teils der Baumaschine zusammen mit den gemessenen Werten der Betriebsparameter ausgibt. Der Betrieb der Baumaschine und die Überwachung ihres Betriebs können so auf kompakte Weise erfolgen, während zusätzlich die Sicherheit im Straßenverkehr oder die Sicherheit beim Fahren der Baumaschine erhöht werden kann und die Bauarbeiten zuverlässig durchgeführt werden können.

Es kann vorgesehen sein, dass die gemessenen Betriebsparameter der Darstellung überlagert dargestellt werden. Der Bediener kann auf diese Weise leicht ein beispielsweise dargestelltes Arbeitsgerät mit den gemessenen Werten der Betriebsparameter assoziieren.

Erfindungsgemäß umfasst die Anzeigeeinrichtung eine Virtual-Reality-Brille und die Darstellung ist abhängig vom Sichtfeld des Bedieners und der Betriebsparameter eines Arbeitsgeräts wird dem Arbeitsgerät zugeordnet dargestellt, wenn das Arbeitsgerät im Sichtfeld eines Bedieners ist. Wie bereits erläutert, kann dem Bediener beispielsweise der oder die Betriebsparameter betreffend die Einbaubohle angezeigt werden, wenn der Bediener auf diese Einbaubohle blickt. Um ihm jedoch zusätzlich die übrigen Informationen bzw. gemessenen Betriebsparameter anzuzeigen, kann ein Bereich in der Anzeigeeinrichtung in Form der Virtual-Reality-Brille eine Liste oder Tabelle oder ähnliche Darstellung umfassen, in der die übrigen Betriebsparameter, die nicht die Betriebsparameter des Arbeitsgerätes betreffen auf das der Bediener gerade schaut, angezeigt werden. Dem Bediener wird so gezielt die von ihm wahrscheinlich benötigte Information angezeigt, während er keinen Informationsverlust erleidet, sich aber dennoch auf den Betrieb der Baumaschine oder das Fahren der Baumaschine konzentrieren kann.

In einer alternativen Ausführungsform ist vorsehen, dass eine Echtzeit-Darstellung zumindest eines Teils der Baumaschine durch eine Kamera aufgenommen und an die Anzeigeeinrichtung übertragen wird, wobei die Anzeigeeinrichtung eine zumindest teilweise animierte Darstellung zumindest des Teils der Baumaschine darstellt. Das Abbilden des Zustands des Teils der Baumaschine in Echtzeit auf der Anzeigeeinrichtung gestattet es dem Bediener, zusätzlich zu den von den Sensoren gemessenen Betriebsparametern auch andere Zustände der Baumaschine wahrzunehmen, die nicht durch Sensoren gemessen werden. Damit wird ein umfangreiches aber gleichzeitig einfaches Überwachen der Baumaschine erreicht.

Dem gegenüber kann eine animierte Darstellung zumindest des Teils der Baumaschine auf der Anzeigeeinrichtung verbesserte Interaktionsmöglichkeiten bereitstellen, indem beispielsweise Ausschnitte der Darstellung vergrößert oder mit ihnen interagiert werden kann, um weitere Steuerungsmöglichkeiten anzuzeigen.

Zusätzlich zu den gemessenen Betriebsparametern können Soll-Werte der Betriebsparameter angezeigt werden. Dem Bediener wird damit ein einfacher Überblick über den Ist-Zustand und mögliche Abweichungen zum Soll-Zustand der Baumaschine gezeigt.

Weiterhin kann die Anzeigeeinrichtung ein Bedienelement umfassen, mit dem der Bediener mit der Darstellung und/oder den gemessenen Betriebsparametern zur Steuerung der Baumaschine interagiert. Bei dem Bedienelement kann es sich beispielsweise um den berührungsempfindlichen Touchscreen eines Touchdisplays handeln. Aber auch Tastatur und Maus oder Joystick oder andere Elemente kommen hier in Betracht. Mit diesen Bedienelementen wird eine Interaktionsmöglichkeit beschaffen, die es dem Bediener erlaubt, auf zentrale Weise auf Betriebsparameter der Baumaschine einzuwirken.

Darüber hinaus kann vorgesehen sein, dass die Baumaschine ein Straßenfertiger ist und das Arbeitsgerät wenigstens eines von dem Antrieb des Straßenfertigers, dem Gutbunker zum Aufnehmen von für den Straßenbau verwendetem Material, Kratzbändern zum Transportieren des Materials aus dem Gutbunker zu einer Verteilerschnecke, einer Einbaubohle, einer Heizung für die Einbaubohle oder ein Nivellierzylinder zum Einstellen des Anhängepunktes der Einbaubohle ist, wobei wenigstens ein Sensor einen Betriebsparameter des Arbeitsgeräts misst. Das erfindungsgemäße Verfahren wird hiermit vorteilhaft für die üblichen Arbeitsgeräte von Straßenfertigern implementiert.

### Kurze Beschreibung der Figuren

- Figur 1: zeigt eine Baumaschine gemäß einer Ausführungsform.
- Figur 2: zeigt eine Baumaschine umfassend mehrere Fahrzeuge gemäß einer Ausführungsform.
- Figuren 3a bis c: zeigen Anzeigeeinrichtungen zum Anzeigen der Betriebsparameter, wobei Figur 3c eine Ausführungsform der Erfindung darstellt.

### Ausführliche Beschreibung

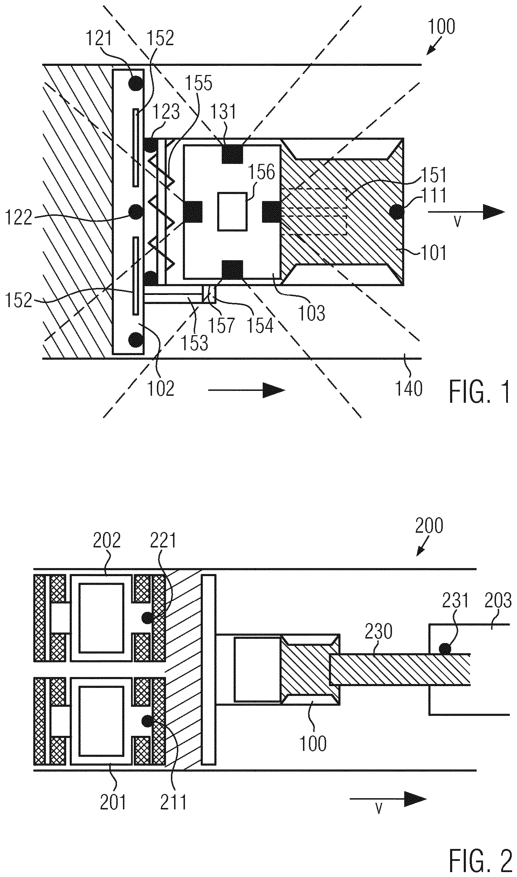

Figur 1 zeigt eine Baumaschine 100 auf einer zu erstellenden oder zu bearbeitenden Straße 140 gemäß einer Ausführungsform der Erfindung. In der hier dargestellten Ausführungsform umfasst die Baumaschine lediglich ein Fahrzeug, das in der dargestellten Form ein Straßenfertiger ist. Straßenfertiger werden verwendet, um den die Straße bildenden Belag auf den Boden aufzubringen. Beispielsweise kann durch den Straßenfertiger eine Asphaltmischung oder Betonmischung oder andere geeignete Materialien aufgebraucht werden.

Der Straßenfertiger als Ausführungsform der Baumaschine 100 kann auf übliche Art ausgebildet sein und ein Radfertiger oder Raupenfertiger mit einem entsprechenden Antrieb/Motor 156 (Dieselmotor, Elektromotor oder ähnliches) sein. Diese Fahrzeuge umfassen üblicherweise ein Fahrerhäuschen 103, einen Gutbunker 101 und eine Einbaubohle 102. In dem Gutbunker wird das Material, das zum Fertigen oder Bearbeiten der Straße genutzt wird, vorgehalten und über hier nur gestrichelt dargestellte Kratzbänder 151 oder andere geeignete Einrichtungen am Boden des Gutbunkers der Einbaubohle 102 zugeführt. Dabei wird das Material meist durch eine Verteilerschnecke 155 zumindest auf eine gewisse Breite der Einbaubohle 102 verteilt, um ein möglichst gleichmäßiges Ausbringen des Materials auf die Straße zu gewährleisten. Die Einbaubohle umfasst bekanntermaßen eine Heizeinrichtung oder Heizung 152 zum Erwärmen des Materials und wird durch Nivellierzylinder 154 und entsprechende Verbindungen 153 mit den Nivellierzylindern 154 in einer bestimmten Position relativ zum Straßenbelag gehalten. Der Nivellierzylinder 154 bzw. dessen Einstellung definiert gleichsam den Anhängepunkt 157 der Einbaubohle. Die Einbaubohle 102 umfasst üblicherweise Verdichtungsaggregate, mit denen das ausgebrachte Material auf der zu fertigenden Straße verdichtet werden kann. Auch eine Bohlenentlastung kann vorgesehen sein.

Der Gutbunker 101 und die Einbaubohle sind Beispiele für eine allgemein als "Arbeitsgerät" 101, 102 Vorrichtung, mit der die Baumaschine beim Erstellen oder Bearbeiten einer Straße mitwirkt.

Neben dem Straßenfertiger 100 kommen auch andere beim Straßenbau eingesetzte Fahrzeuge als Baumaschinen in Betracht.

Während des Betriebs einer solchen Baumaschine fallen üblicherweise eine Vielzahl von für den Fahrer der Baumaschine oder einen neben der Baumaschine herlaufenden Bediener an. Dazu zählen Informationen, die die Baumaschine selbst betreffen, wie beispielsweise ihre Geschwindigkeit oder die Temperatur der (Heizung 152 der) Einbaubohle oder die Ausrichtung der Einbaubohle sowie Betriebsparameter, die den Gutbunker und das darin enthaltende Material betreffen. Zusätzlich können für den Fahrer oder Bediener Informationen hinsichtlich des Straßenbelags, der sich in Fahrtrichtung vor der Baumaschine befindet oder der von der Baumaschine 100 ausgebracht wurde, von Interesse sein. Dazu zählt beispielsweise die Temperatur des Bodens (sogenanntes Planum) vor dem Straßenfertiger und die Temperatur des ausgebrachten Straßenbelags nach dem Fertiger.

Um diese Informationen oder allgemein Betriebsparameter zu messen, ist erfindungsgemäß vorgesehen, dass die Baumaschine eine Vielzahl, wenigstens zwei, Sensoren zum Messen von Betriebsparametern umfasst. So kann beispielsweise ein Sensor 111 vorgesehen sein, der im oder am Gutbunker 101 angeordnet ist und zumindest eine für das im Gutbunker enthaltende Material relevante Temperatur misst. Beispielsweise kann der Sensor 111 die Temperatur der oberflächennahen Asphaltmischung messen oder deren Kerntemperatur oder auch die Temperatur des Materials im Bereich der bereits erwähnten Kratzbänder 151, unmittelbar bevor dieses Material von den Kratzbändern der Einbaubohle zugeführt wird.

Entsprechend können auch ein oder mehrere Sensoren vorgesehen sein, die Betriebsparameter der Einbaubohle messen. So können beispielsweise ein oder mehrere Sensoren 121 vorgesehen sein, die die Breite der Einbaubohle messen oder erfassen, falls die Einbaubohle als in der Breite variable Einbaubohle vorgesehen ist. Auch ein Neigungswinkel der Einbaubohle 102 bezüglich einer horizontalen Ebene kann mit Hilfe von Sensoren gemessen werden. Zusätzlich kann durch diese Sensoren oder einen weiteren Sensor 122 der Anpressdruck der Verdichtungsaggregate bestimmt werden. Weiterhin können Sensoren 123 vorgesehen sein, mit denen beispielsweise Betriebsparameter der Verteilerschnecke (Rotationsgeschwindigkeit oder Ähnliches) oder auch die Temperatur der der Einbaubohle zugeordneten Heizung 152 oder einer Komponente der Einbaubohle 102 selbst messen. Sensoren können zusätzlich oder alternativ vorgesehen sein, um beispielsweise den Abstand der Enden der Einbaubohle zur jeweiligen Straßenbegrenzung zu messen. Auch andere Sensoren, wie beispielsweise ein Sensor zum Messen der aktuellen Position des Straßenfertigers oder allgemein der Baumaschine 100 (beispielsweise GPS-Sensoren) können zum Einsatz kommen.

Ferner sind Sensoren vorgesehen, die Informationen bzw. Betriebsparameter bezüglich der Zusammenarbeit mit anderen Maschinen messen. Beispielsweise kann ein Radarsensor vorgesehen sein, der den Abstand zu einem Beschicker, wie dieser noch in Figur 2 beschrieben wird, bestimmt.

Auch bereits verwendete Sensoren können hier zum Einsatz kommen. So kann beispielsweise eine bereits verwendete Infrarotkamera zur Messung der Temperatur des ausgebrachten Straßenbelags genutzt werden.

Zusätzlich zu diesen Sensoren, die die Betriebsparameter der Baumaschine messen, können eine oder mehrere Kameras 131 (in Fig. 1 als schwarze Quadrate dargestellt) vorgesehen sein, die eine Darstellung, bevorzugt eine Echtzeit-Darstellung in Form eines Videos oder Livestreams, der Baumaschine und/oder ihrer Umgebung aufnehmen. Diese Kameras sind jedoch nicht zwingend erforderlich.

Grundsätzlich können sämtliche bereits in Baumaschinen 100 vorgesehene Sensoren verwendet werden. Zusätzlich können zum Erfassen gegebenenfalls auch als relevant angesehener Betriebsparameter weitere Sensoren in der erfindungsgemäßen Baumaschine 100 vorgesehen werden, um ein Messen der entsprechenden Betriebsparameter zu ermöglichen.

Erfindungsgemäß werden Daten, die den gemessenen Werten der Betriebsparameter entsprechen, einer im Folgenden noch zu beschreibenden Anzeigeeinrichtung zugeführt, auf der die Betriebsparameter zusammen mit einer Darstellung zumindest eines Teils der Baumaschine angezeigt werden.

Figur 2 zeigt eine weitere Ausführungsform einer Baumaschine 200. In dieser Ausführungsform wird die Baumaschine durch eine Vielzahl von Fahrzeugen gebildet. So ist neben dem Straßenfertiger 100, wie dieser bereits in Figur 1 beschrieben wurde, ein Beschickerfahrzeug 203 vorgesehen, der über ein Endlosförderband 230 dem Gutbunker des Straßenfertigers 100 eine Asphaltmischung oder ein anderes auf die Straße auszubringendes Material zuführen kann. Auch das Beschickerfahrzeug 203 kann einen (oder auch mehrere) entsprechenden Sensor zum Messen eines Betriebsparameters, beispielsweise der Menge an zugeführtem Straßenmaterial pro Zeiteinheit (gemessen beispielsweise in Tonnen pro Stunde) umfassen. Auch die von diesem Sensor gewonnenen Daten, die dem gemessenen Wert des Betriebsparameters entsprechen, können im Folgenden an die Anzeigeeinrichtung übertragen werden.

In Fahrtrichtung der Baumaschine 200 hinter dem Straßenfertiger 100 können ein oder mehrere Verdichter 201 und 202 folgen, die den von dem Straßenfertiger 100 ausgebrachten Straßenbelag verdichten. Die Verdichter 201 und 202 können beispielsweise als Walzen ausgebildet sein. Auch hier können ein oder mehrere Sensoren vorgesehen sein, die relevante Betriebsparameter, wie beispielsweise den Abstand zum Straßenfertiger, den Anpressdruck, die Geschwindigkeit oder die Untergrundtemperatur messen. Auch die den gemessenen Werten der Betriebsparameter, die durch diese Sensoren gemessen werden, entsprechenden Daten können der Anzeigeeinrichtung zugeführt werden.

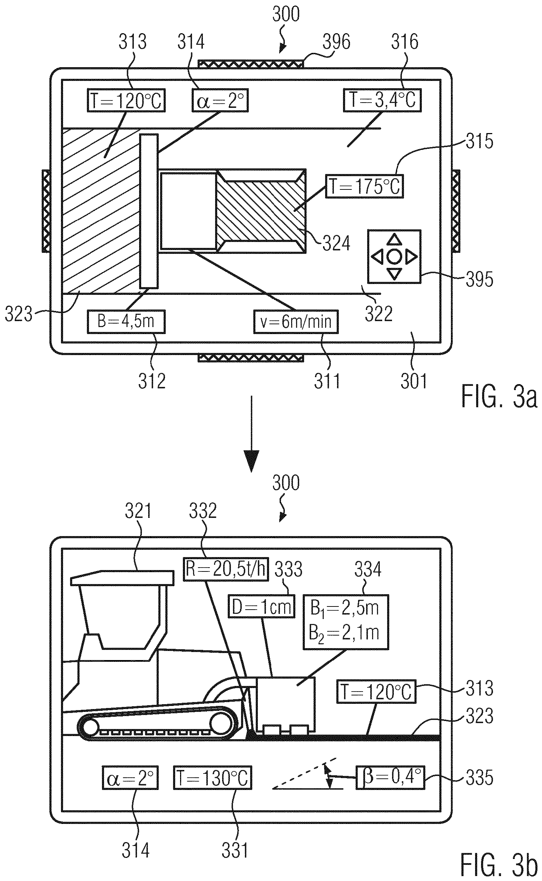

Die Figur 3a zeigt eine erste nicht erfindungsgemäße Ausführungsform einer Anzeigeeinrichtung 300. In der hier dargestellten Ausführungsform ist die Anzeigeeinrichtung zunächst allgemein als Display oder grundsätzlich Einrichtung zum Anzeigen von Informationen ausgebildet. Die Anzeigeeinrichtung 300 kann einen Touchscreen 301 oder eine ähnliche bildausgebende Fläche umfassen. Der Anzeigeeinrichtung 300 können zusätzlich ein oder mehrere Bedienelemente 395 in Form einer Tastatur und Maus zugeordnet sein. Alternativ oder zusätzlich kann bei Verwendung eines Touchdisplays auch das Touchdisplay selbst als berührungsempfindliche Oberfläche zur Interaktion dienen, wobei dann das dargestellte Bedienelement 395 beispielsweise als interaktives Menü ausgestaltet sein kann. Dies ist jedoch nicht zwingend erforderlich. Die Anzeigeeinrichtung 300 verfügt ferner bevorzugt über Mittel zur Speicherung und Verarbeitung von Daten (Prozessor, Speicher oder Ähnliches) oder solche sind ihr zugeordnet. Ebenso können Mittel zum Datenaustausch mit den Sensoren vorgesehen sein. Zur Befestigung der Anzeigeeinrichtung beispielsweise im Fahrerhäuschen oder an der Baumaschine kann eine Halterung 396 vorgesehen sein, die beispielsweise die Anzeigeeinrichtung in Form einer Klammer umgreift. Diese Halterung kann fest an oder in der Baumaschine montiert sein und eine lösbare Verbindung der Anzeigeeinrichtung 300 mit der Baumaschine ermöglichen.

Auf der Anzeigeeinrichtung 300 wird eine Darstellung zumindest eines Teils der Baumaschine (in Figur 3a der Straßenfertiger 321) zusammen mit den gemessenen Werten der Betriebsparameter dargestellt.

Die Darstellung des Teils der Baumaschine 321 kann entweder eine rein animierte (fiktive) Darstellung sein (die also nicht auf echten, beispielsweise mit Hilfe der Kameras 131 gemäß Figur 1 aufgenommenen Bildern basiert). Alternativ kann auch eine Darstellung der durch die Kameras 131 aufgenommenen Echtzeit-Darstellung der Baumaschine 100 erfolgen.

Die Betriebsparameter werden so dargestellt, dass es einem Bediener oder dem Fahrer der Baumaschine 100 möglich ist, die Betriebsparameter dem entsprechenden Arbeitsgerät (beispielsweise Einbaubohle, Heizung, Förderband im Falle eines Beschickerfahrzeugs oder Ähnliches) zuzuordnen. So wird beispielsweise der Betriebsparameter 312, der die gesamte Breite der Einbaubohle betrifft, zusammen mit der Einbaubohle 310 dargestellt. Dies kann in der hier dargestellten Ausführungsform darüber erfolgen, dass der Wert des gemessenen Betriebsparameters b=4,5 m in einem eingerahmten Kasten der Darstellung der Baumaschine überlagert dargestellt wird und beispielsweise mit Hilfe eines Pfeils, Strichs oder anderweitig mit dem betreffenden Arbeitsgerät in Verbindung gebracht wird. Selbiges gilt für den Betriebsparameter 314, der den Anstellwinkel der Einbaubohle durch die Nivellierzylinder mit α=2° darstellt. Auch die Temperatur des Einbaumaterials im Gutbunker 324 kann über eine entsprechende Darstellung 315 der Temperatur T=175°C angegeben werden und so mit dem Gutbunker assoziiert werden, dass der Bediener oder Fahrer der Baumaschine auf einen Blick erkennen kann, dass dieser Wert die Temperatur des Einbaumaterials angibt.

Zusätzlich können auch weitere Betriebsparameter, die nicht notwendig die Baumaschine selbst betreffen, angezeigt werden. Beispielsweise kann die Temperatur des Straßenbelags in Fahrtrichtung vor dem Straßenfertiger 321 über die Darstellung des Betriebsparameters 316 mit T=3,4°C erfolgen. Auch die Temperatur des ausgebrachten Straßenbelags unmittelbar hinter dem Straßenfertiger kann über die Darstellung 313 erfolgen. Hier ist beispielhaft der Wert T=120°C angegeben. Weiterhin können ein oder mehrere Betriebsparameter angegeben werden, die die Bewegung der Baumaschine charakterisieren. In der in Figur 3a dargestellten Ausführungsform ist dies über den Betriebsparameter 311 mit v=6m/min für den Fall der Geschwindigkeit ausgeführt worden.

Während die beschriebenen Betriebsparameter stets neben den entsprechenden Arbeitsgeräten oder beispielsweise neben dem Straßenbelag gezeigt werden, ist ersichtlich, dass auch eine Darstellung der Betriebsparameter in dem entsprechenden Arbeitsgerät oder diesen direkt überlagert, erfolgen kann. So könnte beispielsweise der Betriebsparameter 312 und der Betriebsparameter 314 auch im Bereich der dargestellten Einbaubohle 310 erfolgen.

Dies kann nach Zweckmäßigkeitsgründen gewählt werden, so dass eine Darstellung erfolgt, die dem Bediener eine Zuordnung des gemessenen Werts des Betriebsparameters zu der durch ihn beschriebenen Entität (beispielsweise Arbeitsgerät oder Straße oder Ähnliches) ermöglicht, der Bediener aber auch ohne Schwierigkeiten den gemessenen Wert des Betriebsparameters lesen kann. Grundsätzlich werden die Betriebsparameter der Darstellung zunächst eines Teils der Baumaschine überlagert in Form einer Mixed Reality oder Augmented Reality dargestellt.

In der in Figur 3a dargestellten Ausführungsform sind lediglich die von den Sensoren gemessenen Werte der Betriebsparameter dargestellt. Es kann jedoch auch vorteilhaft sein, dass zusätzlich zu diesen Werten, die gemeinhin auch als "Ist-Werte" bezeichnet werden, Soll-Werte für zumindest einen oder einige der Betriebsparameter dargestellt werden. Dies kann beispielsweise so erfolgen, dass in den dargestellten eingerahmten Kästchen nicht nur der Ist-Wert dargestellt werden, sondern zusätzlich der Soll-Wert und gegebenenfalls sogar die Differenz aus beiden, so dass es dem Bediener möglich ist, die Arbeitsweise oder den Betriebsmodus der Baumaschine oder des Arbeitsgeräts entsprechend anzupassen. So kann beispielsweise beim Erstellen der Straße vorgesehen sein, dass das ausgebrachte Material eine Temperatur von 135°C aufweist. Dies ist dann der "Soll-Wert" für den betreffenden Betriebsparameter. Dieser würde zusammen mit der aktuell gemessenen Temperatur im Feld 313 dargestellt. Die Differenz aus Soll-Wert - Ist-Wert oder Ist-Wert - Soll-Wert kann zusätzlich in dem Feld 313 dargestellt werden.

Während in den bisher beschriebenen Ausführungsformen lediglich numerische Werte, die beispielsweise für die Bewegung der Baumaschine oder Betriebsparameter des Arbeitsgeräts oder der Baumaschine maßgeblich waren, ausgegeben wurden, sind auch andere Ausführungsformen denkbar. So können auch nicht numerisch angebbare Betriebsparameter oder üblicherweise nicht numerisch angegebene Betriebsparameter angezeigt werden. Dies betrifft beispielsweise die Heizung der Einbaubohle oder die Kratzbänder. Hier kann alternativ oder zusätzlich zu beispielsweise der Transportgeschwindigkeit der Kratzbänder angegeben werden, ob diese eingeschaltet oder ausgeschaltet sind. Selbiges gilt für die Heizung oder die Verteilerschnecke, die der Einbaubohle zugeordnet sind. Darüber hinaus können auch Fehlermeldungen oder Warnungen auf der Anzeigeeinrichtung ausgegeben werden, die beispielsweise der gesamten Darstellung überlagert werden oder zumindest einen Teil der Darstellung überlagern.

Während grundsätzlich zumindest ein Teil der Baumaschine auf der Anzeigeeinrichtung 300 dargestellt wird, kann, wie dies in Figur 3a erfolgte, auch die gesamte Baumaschine auch mit Bezug auf die Straße dargestellt werden.

Figur 3b zeigt eine weitere Ausführungsform der Darstellung auf der Anzeigeeinrichtung. In der hier dargestellten Ausführungsform wird nur ein Teil der Baumaschine (hier erneut ein Straßenfertiger) dargestellt. So wurde hier beispielsweise auf die Darstellung des Gutbunkers im Wesentlichen verzichtet. Die in Figur 3b dargestellte Ausführungsform zeigt jedoch die Einbaubohle und detailliertere Betriebsparameter, die die Einbaubohle betreffen.

So sind zusätzlich zu den bereits in Figur 3a gezeigten Betriebsparametern 314 und 313 weitere Betriebsparameter gezeigt. So ist mit dem Betriebsparameter 331 die Temperatur des Einbaumaterials mit T=130°C unmittelbar im Bereich der Einbaubohle angegeben. Der Betriebsparameter 332 kennzeichnet mit R=20,5 t/h den Durchsatz oder die Ausbringrate, der über die Verteilerschnecke realisiert wird. Der Betriebsparameter 334 beschreibt die Gesamtbreite und/oder die Breite von ausziehbaren Elementen der Einbaubohle. Bei üblichen Straßenfertigern kann eine Einbaubreite von bis zu 16 Metern realisiert werden. In diesem Fall ist es besonders vorteilhaft, wenn die Enden der Einbaubohle bezüglich der Mitte der Einbaubohle einen gewissen "Durchhang" aufweisen, um den Auftrieb dieser Ränder auf dem teilweise flüssigen oder zumindest dickflüssigen Einbaumaterial zu kompensieren. Dieser Durchhang kann mehrere Zentimeter betragen und kann zusätzlich als Betriebsparameter 333 in diesem Fall mit D=1cm bezeichnet werden. Weiterhin kann mit dem Betriebsparameter 335 der Neigungswinkel des Straßenbelags oder der Baumaschine 321 zur Horizontalen dargestellt werden (hier β=0,4°), wohingegen mit dem bereits aus der Figur 3a bekannten Betriebsparameter 314 α=2° die Einstellung der oder des Nivellierzylinders angegeben werden kann.

Die Angabe der Betriebsparameter gemäß der Figur 3b ist nur beispielhaft und nicht abschließend und auch nicht zwingend zu verstehen. So kann anstelle des Betriebsparameters 332 auch ein anderer Betriebsparameter angegeben werden. Dies gilt selbstverständlich auch für die weiteren dargestellten Betriebsparameter.

Von der allgemeineren Darstellung in Figur 3a kann ein Bediener der Anzeigeeinrichtung zur Figur 3b beispielsweise über Interaktion mit der angezeigten Darstellung der Figur 3a gelangen. Die bereits mit Bezug auf Figur 3a beschriebenen Bedienelemente können dazu genutzt werden. Ist beispielsweise die Anzeigeeinrichtung 300 mit einem berührungsempfindlichen Touchdisplay 301 (siehe Figur 3a) ausgebildet, kann der Bediener durch Berührung des Displays im Bereich der Einbaubohle 310 von der Darstellung in Figur 3a zur Darstellung in Figur 3b gelangen, die eine vergrößerte und detaillierte Ansicht des Arbeitsgeräts (in diesem Beispiel Einbaubohle) anzeigt. Dies ist vorteilhaft umsetzbar, wenn die Darstellung in der Figur 3a eine animierte Darstellung der Baumaschine ist. Für den Fall, dass die Darstellung in Figur 3a eine Echtzeit-Darstellung der Baumaschine mit Hilfe der Kameras 131 (siehe Figur 1) zeigt, kann über geeignete Interaktion mit der Anzeigeeinrichtung dennoch zu der Darstellung gemäß Figur 3b gelangt werden, indem beispielsweise über eine Auswahl von Menüpunkten oder durch entsprechende Eingabe mit Hilfe der Eingabeeinrichtung die detailliertere Darstellung gemäß der Figur 3b aufgerufen wird.

Die Möglichkeit, zwischen einer weniger detaillierten Gesamtansicht der Baumaschine und einer Darstellung nur eines Teils der Baumaschine (ggf. mit mehr Betriebsparametern) mit mehr Betriebsparametern zu wechseln, erlaubt es dem Bediener, in jeder Situation die für ihn relevanten Betriebsparameter möglichst auf einen Blick und mit möglichst wenig Interaktion mit der Anzeigeeinrichtung zu erhalten. Dies erleichtert dem Bediener die Bedienung und kann insbesondere bei Verwendung der Anzeigeeinrichtung durch den Fahrer diesen möglichst wenig durch die Interaktion mit der Anzeigeeinrichtung von seiner eigentlichen Aufgabe, die Baumaschine zu steuern, ablenken. Damit kann das Unfallrisiko minimiert werden.

Es versteht sich, dass die Darstellungen der Figuren 3a und 3b nicht auf einen Straßenfertiger beschränkt sind, sondern auch andere Baumaschinen, die bei der Erstellung oder dem Bearbeiten von Straßen zum Einsatz kommen, dargestellt werden können. Beispielsweise kann das Beschickerfahrzeug gemäß Figur 2 ebenfalls auf einer entsprechenden Anzeigeeinrichtung entweder zusätzlich zum Straßenfertiger oder alternativ dazu dargestellt werden.

Die Anzeigeeinrichtung 300 in Form eines Displays, wie dies in den Figuren 3a und 3b dargestellt wurde, kann beispielsweise fest im Fahrerhäuschen der Baumaschine 100 angeordnet sein. Hier kann sie die Betriebsparameter nicht nur des Fahrzeugs, an dem sie montiert ist, darstellen, sondern sie kann zusätzlich auch Betriebsparameter weiterer Fahrzeuge wie beispielsweise des Beschickers oder der Planierraupen gemäß Figur 2 darstellen. So kann dem Fahrer des Straßenfertigers 100 gemäß Figur 2 jede notwendige Information nicht nur bezüglich des Straßenfertigers selbst, sondern auch bezüglich weiterer, mit dem Straßenfertiger zusammenarbeitender Fahrzeuge zur Verfügung gestellt werden, um die Bedienung des Straßenfertigers zu optimieren.

Alternativ oder zusätzlich kann eine Anzeigeeinrichtung 300 auch außerhalb einer Baumaschine in Form eines transportablen Displays, wie beispielsweise eines Tabletcomputers, vorgesehen sein. Sie kann auch an der äußeren Verkleidung der Baumaschine fest montiert sein, so dass ein neben der Baumaschine herlaufender Bediener in der Lage ist, die Betriebsparameter zu überwachen.

Dabei kann auch vorgesehen sein, dass die Anzeigeeinrichtung zwar als mobile Anzeigeeinrichtung in Form eines Tabletcomputers oder Ähnlichem ausgebildet ist, jedoch an entsprechenden Aufnahmen oder Halterungen einer Baumaschine befestigt werden kann. Bei dieser Ausführungsform kann dann vorgesehen sein, dass die Anzeige auf der Anzeigeeinrichtung, insbesondere die Darstellung der Baumaschine oder eines Teils der Baumaschine sowie die angezeigten Betriebsparameter sich abhängig davon ändern, ob die Baumaschine in einer entsprechend Aufnahme angeordnet ist oder nicht. Es kann auch vorgesehen sein, dass sich die Darstellung davon abhängig ändert, in welcher Aufhängung oder Aufnahme die Anzeigeeinrichtung angeordnet ist.

Beispielsweise kann eine Aufnahme im Bereich des Antriebs der Baumaschine 100 vorgesehen sein. Wird die Anzeigeeinrichtung in dieser Aufnahme verbracht, kann die Darstellung auf der Anzeigeeinrichtung so geändert werden, dass eine Darstellung der Antriebseinrichtung und Betriebsparameter betreffend des Antriebs/Motors und beispielsweise der Kettenräder bei Ausführung eines Straßenfertigeres als Raupenfertiger erfolgt. Wird die Anzeigeeinrichtung in eine Aufnahme im Bereich der Einbaubohle verbracht, kann eine Darstellung der Einbaubohle, wie sie beispielsweise in Figur 3b beschrieben ist, erfolgen, was auch die zugehörigen Betriebsparameter betreffen kann.

Bei dieser Ausführungsform kann die Interaktion des Bedieners mit der Anzeigeeinrichtung noch weiter vereinfacht werden, da ihm stets die zu dem entsprechenden Arbeitsgerät oder dem entsprechenden Teil der Baumaschine relevanten Informationen dargestellt werden, ohne dass es zusätzlicher Interaktionen bedarf. Ist die Anzeigeeinrichtung in keiner Aufnahme angeordnet, kann eine allgemeine Darstellung beispielsweise gemäß Figur 3a erfolgen, so dass dem Bediener eine Übersicht über einige der relevantesten Betriebsparameter gegeben wird.

Damit die Anzeigeeinrichtung erkennt, in welcher Halterung sie angeordnet ist und die Darstellung entsprechend ändert, kann vorgesehen sein, dass jede Halterung beispielsweise über eine elektronische oder mechanische Identifikation verfügt, die von der Anzeigeeinrichtung und/oder der Anzeigeeinrichtung zugeordneten Prozessoreinheit erkannt werden kann und die Prozessoreinheit und/oder die Anzeigeeinrichtung dann ausgebildet ist, die Anzeige entsprechend der erkannten Halterung und damit entsprechend der Position der Anzeigeeinrichtung zu ändern. Dies kann beispielsweise mit Hilfe von RFID-Identifikation erfolgen.

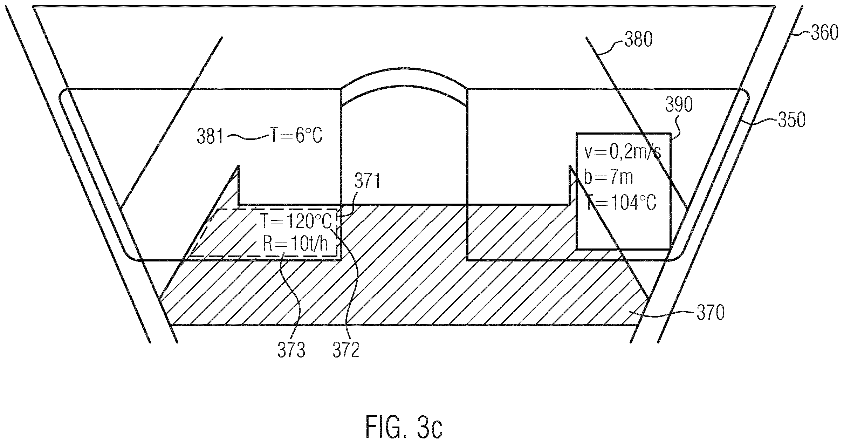

Figur 3c zeigt eine erfindungsgemäße Ausführungsform der Anzeigeeinrichtung 300 in Form einer Datenbrille, auch bekannt als Virtual-Reality-Brille 350. Diese kann entweder als Head-Mounted-Display ausgestaltet werden, das einen vor den Augen positionierbaren, undurchsichtigen Bildschirm umfasst. Alternativ kann auch vorgesehen sein, dass die Virtual-Reality-Brille 350 in Form einer üblichen "Brille" mit eingebautem Display in Form eines Smartglasses bzw. einer Datenbrille ausgebildet ist. In der ersten Ausführungsform ist die Virtual-Reality-Brille hinsichtlich ihrer Eigenschaften vergleichbar mit der Anzeigeeinrichtung gemäß den Figuren 3a und 3b, wohingegen in der zweiten Ausführungsform in Form einer Datenbrille eine künstliche Darstellung beispielsweise mit Hilfe einer animierten Darstellung oder durch Kameras aufgenommener Bilder der Baumaschine nicht notwendig ist und die "Darstellung" zumindest eines Teils der Baumaschine dadurch erfolgt, dass der Bediener die Baumaschine durch die Datenbrille hindurch betrachtet, die Darstellung also dem gegenwärtigen Sichtfeld des Bedieners und Trägers der Datenbrille entspricht.

Die Figur 3c beschäftigt sich daher im Wesentlichen mit der Ausführungsform der Virtual-Reality-Brille als Datenbrille und nicht mit der Ausführungsform als Head-Mounted-Display, da in dieser Ausführungsform die wesentlichen Merkmale bereits mit Bezug auf die Figuren 3a und 3b beschrieben wurden.

In der Ausführungsform in Figur 3c blickt ein Bediener durch die Brille 350 hindurch auf einen Teil der Baumaschine 360, nämlich zumindest einen Teil des Gutbunkers 370, und blickt darüber hinaus auch auf die in Fahrtrichtung vor der Baumaschine befindliche Straße 380. In der dargestellten Ausführungsform wird dem Bediener in einem Glas bzw. auf der linken Seite der Datenbrille 350 ein Bereich 371 angezeigt, der den Gutbunker 370 hervorhebt und in dem dem Gutbunker zugeordnete Betriebsparameter 372 (Temperatur des Einbaumaterials) und 373 (Durchsatz der Kratzbänder in Tonnen pro Stunde, R=10 t/h) angezeigt werden. Dies kann durch bekannte Maßnahmen zur Bilderkennung erfolgen, durch die die Datenbrille bzw. eine ihr zugeordnete Datenverarbeitungseinrichtung oder ein Prozessor den Gutbunker 370 erkennt und die von den Sensoren gemessenen Werte der Betriebsparameter diesen Gutbunker zuordnet. Zusätzlich erblickt der Bediener durch die Datenbrille 350 die Straße 380, so dass ebenfalls im linken Bereich der Datenbrille die Temperatur 361 der Straße 380 (hier mit T=6°C) angezeigt werden kann.

Es versteht sich, dass hier auch andere Betriebsparameter angezeigt werden können, die nicht lediglich den Gutbunker oder die Straße betreffen, sondern beispielsweise auch die Einbaubohle oder ein anderes Arbeitsgerät charakterisieren. Sämtliche bisher diskutierten Betriebsparameter kommen in Betracht. Ferner muss die Darstellung der entsprechenden Betriebsparameter nicht ausschließlich in dem linken Glas bzw. in der linken Seite der Datenbrille 350 erfolgen, sondern sie kann auch in jedem der Gläser oder auf der rechten Seite der Datenbrille 350 erfolgen.

Die hier dargestellte Ausführungsform stellt bestimmte Betriebsparameter in Abhängigkeit des Sichtfeldes bzw. der Blickrichtung des Trägers der Datenbrille 350 dar. Dies kann auch für eine Virtual-Reality-Brille als Realisierung in Form eines Head-Mounted-Display vorgesehen sein. Das bedeutet aber gleichzeitig, dass der Bediener üblicherweise nicht sämtliche Komponenten oder Teile der Baumaschine erblickt und ihm daher Informationen fehlen könnten. Deshalb kann vorgesehen sein, dass in einem Listenbereich 390 der Datenbrille (oder allgemeiner Virtual-Reality-Brille, da dies auch für die Head-Mounted-Displays gelten kann) weitere Betriebsparameter für Arbeitsgeräte oder andere Einrichtungen/Komponenten der Baumaschine 100 dargestellt werden, die sich aktuell nicht im Sichtfeld des Bedieners befinden. Dreht der Bediener beispielsweise seinen Kopf, so dass er anstelle des Gutbunkers 101 die Einbaubohle 102 in seinem Sichtfeld hat, können ihm die Betriebsparameter der Einbaubohle beispielsweise im linken Glas der Datenbrille 350 dargestellt werden, wie dies hier für die Betriebsparameter des Gutbunkers beispielhaft erläutert wurde. Die Betriebsparameter des Gutbunkers können dann in dem Listenbereich 390 angezeigt werden. In der hier dargestellten Ausführungsform, in der der Träger der Datenbrille bzw. der Bediener jedoch den Gutbunker erblickt, können weitere Betriebsparameter, wie die Geschwindigkeit der Baumaschine, die Einbaubreite der Einbaubohle oder die Temperatur des ausgebrachten Straßenbelags in dem Listenbereich 390 angezeigt werden.

Es versteht sich, dass mit der Virtual-Reality-Brille 350 (unabhängig von der Ausführung als Head-Mounted-Display oder als Datenbrille) sämtliche bereits erläuterten Betriebsparameter angezeigt werden können. Insbesondere kann bei Verwendung eines Head-Mounted-Display als Virtual-Reality-Brille ebenfalls eine Darstellung analog zu der Datenbrille 350 erfolgen, indem auf dem Display eine Echtzeit-Darstellung der Baumaschine erfolgt, die von dem Sichtfeld bzw. Blickrichtung des Bedieners abhängig ist und beispielsweise durch die Kameras 131, wie diese mit Bezug auf Figur 1 beschrieben wurden, erzeugt wird. So kann der Bediener trotz des an sich undurchsichtigen Bildschirms die aktuelle Lage in und um die Baumaschine beobachten und kann gleichzeitig mit den notwendigen Betriebsparametern für die Steuerung der Baumaschine versorgt werden.

Grundsätzlich erfolgt die Darstellung der Betriebsparameter unter Verwendung einer Virtual-Reality-Brille in Form einer Augmented Reality, so dass der eigentlichen Darstellung der Umgebung die Betriebsparameter überlagert dargestellt werden, bevorzugt ohne die Sicht auf die Baumaschine maßgeblich zu behindern.

## Patentansprüche

1. Baumaschine (100) zum Erstellen oder Bearbeiten einer Straße, wie beispielsweise ein Straßenfertiger, die Baumaschine umfassend wenigstens ein Arbeitsgerät (101, 102), eine Anzeigeeinrichtung (300) und eine Vielzahl von Sensoren (111, 121, 122, 123), wobei jeder Sensor zum Messen eines Wertes eines Betriebsparameters der Baumaschine (100) ausgebildet ist, wobei die Sensoren Daten entsprechend der gemessenen Werte an die Anzeigeeinrichtung (300) ausgeben können und die Anzeigeeinrichtung ausgebildet ist, eine Darstellung zumindest eines Teils der Baumaschine (100) zusammen mit den gemessenen Werten der Betriebsparameter auszugeben, wobei zumindest ein Sensor zur Messung eines Betriebsparameters bezüglich der Zusammenarbeit mit anderen Maschinen vorgesehen ist, sodass dem Betriebsparameter bezüglich der Zusammenarbeit mit den anderen Maschinen entsprechende Daten der Anzeigeeinrichtung zugeführt werden können,
**dadurch gekennzeichnet, dass**
die Anzeigeeinrichtung (300) eine Virtual-Reality-Brille (350) umfasst, die so ausgebildet ist, dass die Darstellung abhängig von dem Sichtfeld des Bedieners ist, wobei die Betriebsparameter eines Arbeitsgeräts dem Arbeitsgerät zugeordnet dargestellt werden, wenn das Arbeitsgerät im Sichtfeld des Bedieners ist, und
die Betriebsparameter des Arbeitsgeräts vorzugsweise in einem Listenbereich (390) dargestellt werden, wenn das Arbeitsgerät nicht im Sichtfeld des Bedieners ist.

2. Baumaschine (100) nach Anspruch 1, weiterhin umfassend eine Kamera (131) zum Aufnehmen einer Echtzeit-Darstellung zumindest eines Teils der Baumaschine (100) und zum Übertragen der aufgenommenen Echtzeit-Darstellung an die Anzeigeeinrichtung (300).

3. Baumaschine (100) nach Anspruch 1 oder 2, wobei die Betriebsparameter wenigstens eines von der Bewegung der Baumaschine (100), der Funktion des Arbeitsgeräts, des Betriebsmodus des Arbeitsgeräts und/oder der Position der Baumaschine (100) in der Umgebung angeben.

4. Baumaschine (100) nach einem der Ansprüche 1 bis 3, wobei die gemessenen Werte der Betriebsparameter der Darstellung zumindest des Teils der Baumaschine (100) überlagert durch die Anzeigeeinrichtung (300) dargestellt werden können.

5. Baumaschine (100) nach einem der Ansprüche 1 bis 4, wobei die Anzeigeeinrichtung (300) ausgebildet ist, zusätzlich zu den gemessenen Werten der Betriebsparameter zumindest einen Soll-Wert für zumindest einen der Betriebsparameter auszugeben.

6. Baumaschine (100) nach einem der Ansprüche 1 bis 5, wobei die Baumaschine (100) ein Straßenfertiger ist und das Arbeitsgerät wenigstens eines von dem Antrieb (156) des Straßenfertigers, dem Gutbunker (101) zum Aufnehmen von für den Straßenbau verwendetem Material, Kratzbänder (151) zum Transportieren des Materials aus dem Gutbunker zu einer Verteilerschnecke (155), eine Einbaubohle (102), eine Heizung (152) für die Einbaubohle (102) oder ein Nivellierzylinder (154) zum Einstellen eines Anhängepunktes (157) der Einbaubohle ist, wobei wenigstens ein Sensor (111, 121, 122, 123) zum Messen eines Betriebsparameters des Arbeitsgeräts vorgesehen ist.

7. Verfahren zum Anzeigen von Betriebsparametern einer Baumaschine (100) zum Erstellen oder Bearbeiten einer Straße, wie beispielsweise eines Straßenfertigers, wobei das Verfahren umfasst, dass von einer Vielzahl von Sensoren (111, 121, 122, 123) jeweils ein Wert eines Betriebsparameters gemessen und dieser Wert an eine Anzeigeeinrichtung (300) ausgegeben wird, wobei die Anzeigeeinrichtung eine Darstellung zumindest eines Teils der Baumaschine (100) zusammen mit den gemessenen Werten der Betriebsparameter ausgibt, wobei zumindest ein Sensor vorgesehen ist, der einen Betriebsparameter bezüglich der Zusammenarbeit mit anderen Maschinen misst und wobei dem Betriebsparameter bezüglich der Zusammenarbeit mit anderen Maschinen entsprechende Daten der Anzeigeeinrichtung zugeführt werden,
**dadurch gekennzeichnet, dass**
die Anzeigeeinrichtung (300) eine Virtual-Reality-Brille (350) umfasst und die Darstellung abhängig von dem Sichtfeld des Bedieners ist, wobei die Betriebsparameter eines Arbeitsgeräts dem Arbeitsgerät zugeordnet dargestellt werden, wenn das Arbeitsgerät im Sichtfeld des Bedieners ist, und
die Betriebsparameter des Arbeitsgeräts vorzugsweise in einem Listenbereich (390) dargestellt werden, wenn das Arbeitsgerät nicht im Sichtfeld des Bedieners ist.

8. Verfahren nach Anspruch 7, wobei die gemessenen Betriebsparameter der Darstellung überlagert dargestellt werden.

9. Verfahren nach Anspruch 7 oder 8, wobei eine Echtzeit-Darstellung zumindest eines Teils der Baumaschine (100) durch eine Kamera (131) aufgenommen und an die Anzeigeeinrichtung (300) übertragen wird, wobei die Anzeigeeinrichtung eine zumindest teilweise animierte Darstellung zumindest des Teils der Baumaschine (100) darstellt.

10. Verfahren nach einem der Ansprüche 7 bis 9, wobei zusätzlich zu den gemessenen Betriebsparametem Soll-Werte der Betriebsparameter dargestellt werden.

11. Verfahren nach einem der Ansprüche 7 bis 10, wobei die Anzeigeeinrichtung (300) ein Bedienelement umfasst, mit dem der Bediener mit der Darstellung und/oder den gemessenen Betriebsparametem zur Steuerung der Baumaschine (100) interagiert.

12. Verfahren nach einem der Ansprüche 7 bis 11, wobei die Baumaschine (100) ein Straßenfertiger ist und das Arbeitsgerät wenigstens eines von dem Antrieb (156) des Straßenfertigers, dem Gutbunker (101) zum Aufnehmen von für den Straßenbau verwendetem Material, Kratzbänder (151) zum Transportieren des Materials aus dem Gutbunker zu einer Verteilerschnecke (155), eine Einbaubohle (102), eine Heizung (152) für die Einbaubohle oder ein Nivellierzylinder (154) zum Einstellen des Anhängepunktes (157) der Einbaubohle ist, wobei wenigstens ein Sensor (111, 121, 122, 123) einen Betriebsparameter des Arbeitsgeräts misst.

## Claims

1. A construction machine (100) for constructing or maintaining a road, such as a paver, the construction machine comprising at least one working device (101, 102), a display device (300) and a plurality of sensors (111, 121, 122, 123), each sensor being configured to measure a value of an operating parameter of the construction machine (100), wherein the sensors enable output of data corresponding to the measured values to the display device (300) and the display device is configured to output a representation of at least a part of the construction machine (100) together with the measured values of the operating parameters, wherein at least one sensor is provided for measuring an operating parameter relating to the interaction with other machines, thereby enabling data corresponding to the operating parameter relating to the interaction with the other machines to be supplied to the display device,
**characterized in that**
the display device (300) comprises a virtual reality headset (350) configured such that the representation is dependent on the operator's field of vision, the operating parameters of a working device being displayed when the working device is in the operator's field of view, and the operating parameters of the working device are preferably displayed in a list area (390) when the working device is not in the operator's field of view.

2. The construction machine (100) according to claim 1, further comprising a camera (131) for capturing a real-time representation of at least a part of the construction machine (100) and for transmitting the captured real-time representation to the display device (300).

3. The construction machine (100) according to claims 1 or 2, wherein the operating parameters indicate at least one of the movement of the construction machine (100), the function of the working device, the operating mode of the working device and/or the position of the construction machine (100) in the environment.

4. The construction machine (100) according to any one of claims 1 to 3, wherein the display device (300) enables displaying of the measured values of the operating parameters of the representation of at least the part of the construction machine (100) in a superimposed manner.

5. The construction machine (100) according to any one of claims 1 to 4, wherein the display device (300) is configured to output, in addition to the measured values of the operating parameters, at least one setpoint value for at least one of the operating parameters.

6. The construction machine (100) according to any one of claims 1 to 5, wherein the construction machine (100) is a road paver and the working device is at least one of the drive (156) of the road paver, the material hopper (101) for receiving material used for road construction, scraper belts (151) for transporting the material from the material hopper to a spreading screw (155), a screed (102), a heating system (152) for the screed (102) or a levelling cylinder (154) for adjusting a towing point (157) of the screed, wherein at least one sensor (111, 121, 122, 123) is provided for measuring an operating parameter of the working device.

7. A method for displaying operating parameters of a construction machine (100) for constructing or maintaining a road, such as a paver, the method comprising a value of an operating parameter being measured by one of a plurality of sensors (111, 121, 122, 123), each of the values being output to a display device (300), the display device outputting a representation of at least a part of the construction machine (100) together with the measured values of the operating parameters, at least one sensor being provided which measures an operating parameter relating to the interaction with other machines, and data corresponding to the operating parameter relating to the interaction with other machines being supplied to the display device,
**characterized in that**
the display device (300) comprises a virtual reality headset (350) and the representation is dependent on the operator's field of vision, the operating parameters of a working device being displayed in association with the working device when the working device is in the operator's field of vision, and the operating parameters of the working device preferably being displayed in a list area (390) when the working device is not in the operator's field of vision.

8. The method according to claim 7, wherein the measured operating parameters are represented in a superimposed manner with respect to the representation.

9. The method according to claim 7 or 8, wherein a real-time representation of at least a part of the construction machine (100) is captured by a camera (131) and transmitted to the display device (300), wherein the display device outputs an at least partially animated representation of at least the part of the construction machine (100).

10. The method according to any one of claims 7 to 9, wherein setpoints of the operating parameters are represented in addition to the measured operating parameters.

11. The method according to any one of claims 7 to 10, wherein the display device (300) comprises an operating element, with which the operator interacts with the representation and/or the measured operating parameters for controlling the construction machine (100).

12. The method according to any one of claims 7 to 11, wherein the construction machine (100) is a road paver and the working device is at least one of the drive (156) of the road finisher, the material hopper (101) for receiving material used for road construction, scraper belts (151) for transporting the material from the material hopper to a spreading screw (155), a screed (102), a heating system (152) for the screed or a levelling cylinder (154) for adjusting a towing point (157) of the screed, with at least one sensor (111, 121, 122, 123) measuring an operating parameter of the working device.

## Revendications

1. Engin de construction (100) permettant de créer ou traiter une route, tel qu'un finisseur routier, l'engin de construction comprenant au moins un appareil de travail (101, 102), un dispositif d'affichage (300) et une pluralité de capteurs (111, 121, 122, 123), dans lequel chaque capteur est conçu pour mesurer une valeur d'un paramètre de fonctionnement de l'engin de construction (100), dans lequel les capteurs peuvent fournir des données au dispositif d'affichage (300) en fonction des valeurs mesurées et dans lequel le dispositif d'affichage est conçu pour fournir une représentation d'au moins une partie de l'engin de construction (100) en même temps que les valeurs mesurées des paramètres de fonctionnement, dans lequel au moins un capteur est prévu pour mesurer un paramètre de fonctionnement en rapport avec la coopération avec d'autres engins, de sorte que des données correspondant au paramètre de fonctionnement en rapport avec la coopération avec les autres engins peuvent être fournies au dispositif d'affichage,
**caractérisé en ce que**
le dispositif d'affichage (300) comprend des lunettes de réalité virtuelle (350) conçues de sorte que la représentation dépend du champ de vision de l'opérateur, dans lequel les paramètres de fonctionnement d'un appareil de travail sont représentés associés à l'appareil de travail lorsque l'appareil de travail est dans le champ de vision de l'opérateur, et les paramètres de fonctionnement de l'appareil de travail sont représentés de manière préférée dans une zone de liste (390) lorsque l'appareil de travail n'est pas dans le champ de vision de l'opérateur.

2. Engin de construction (100) selon la revendication 1, comprenant en outre une caméra (131) permettant d'enregistrer une représentation en temps réel d'au moins une partie de l'engin de construction (100) et permettant de transmettre la représentation en temps réel enregistrée au dispositif d'affichage (300).

3. Engin de construction (100) selon la revendication 1 ou 2, dans lequel les paramètres de fonctionnement indiquent au moins un élément parmi un déplacement de l'engin de construction (100), une fonction de l'appareil de travail, un mode de fonctionnement de l'appareil de travail et/ou une position de l'engin de construction (100) dans l'environnement.

4. Engin de construction (100) selon l'une quelconque des revendications 1 à 3, dans lequel les valeurs mesurées des paramètres de fonctionnement de la représentation d'au moins ladite partie de l'engin de construction (100) peuvent être représentées de manière superposée grâce au dispositif d'affichage (300).

5. Engin de construction (100) selon l'une quelconque des revendications 1 à 4, dans lequel le dispositif d'affichage (300) est conçu pour fournir au moins une valeur de consigne pour au moins un des paramètres de fonctionnement en plus des valeurs mesurées des paramètres de fonctionnement.

6. Engin de construction (100) selon l'une quelconque des revendications 1 à 5, dans lequel l'engin de construction (100) est un finisseur routier et l'appareil de travail est au moins un dispositif parmi l'entraînement (156) du finisseur routier, la trémie (101) permettant de recevoir le matériau utilisé pour la construction de routes, des bandes racleuses (151) permettant de transporter le matériau depuis la trémie jusqu'à une vis de distribution (155), une table de pose (102), un chauffage (152) pour la table de pose (102) ou un cylindre de nivellement (154) permettant d'ajuster un point d'attache (157) de la table de pose, dans lequel au moins un capteur (111, 121, 122, 123) permettant de mesurer un paramètre de fonctionnement de l'appareil de travail est fourni.

7. Procédé d'affichage de paramètres de fonctionnement d'un engin de construction (100) permettant de créer ou traiter une route, tel qu'un finisseur routier, dans lequel le procédé comprend la mesure de respectivement une valeur d'un paramètre de fonctionnement par une pluralité de capteurs (111, 121, 122, 123) et la fourniture de ladite valeur à un dispositif d'affichage (300), dans lequel le dispositif d'affichage fournit une représentation d'au moins une partie de l'engin de construction (100) en même temps que les valeurs mesurées des paramètres de fonctionnement, dans lequel au moins un capteur qui mesure un paramètre de fonctionnement en rapport avec la coopération avec d'autres engins est fourni et dans lequel des données correspondant au paramètre de fonctionnement en rapport avec la coopération avec d'autres engins sont fournies au dispositif d'affichage,
**caractérisé en ce que**
le dispositif d'affichage (300) comprend des lunettes de réalité virtuelle (350) et la représentation dépend du champ de vision de l'opérateur, dans lequel les paramètres de fonctionnement d'un appareil de travail sont représentés associés à l'appareil de travail lorsque l'appareil de travail est dans le champ de vision de l'opérateur, et les paramètres de fonctionnement de l'appareil de travail sont représentés de manière préférée dans une zone de liste (390) lorsque l'appareil de travail n'est pas dans le champ de vision de l'opérateur.

8. Procédé selon la revendication 7, dans lequel les paramètres de fonctionnement mesurés sont représentés de manière superposée à la représentation.

9. Procédé selon la revendication 7 ou 8, dans lequel une représentation en temps réel d'au moins une partie de l'engin de construction (100) est enregistrée par une caméra (131) et transmise au dispositif d'affichage (300), dans lequel le dispositif d'affichage représente une représentation au moins partiellement animée d'au moins la partie de l'engin de construction (100).

10. Procédé selon l'une quelconque des revendications 7 à 9, dans lequel des valeurs de consigne des paramètres de fonctionnement sont représentées en plus des paramètres de fonctionnement mesurés.

11. Procédé selon l'une quelconque des revendications 7 à 10, dans lequel le dispositif d'affichage (300) comprend un élément de commande grâce auquel l'opérateur interagit avec la représentation et/ou avec les paramètres de fonctionnement mesurés afin de commander l'engin de construction (100).

12. Procédé selon l'une quelconque des revendications 7 à 11, dans lequel l'engin de construction (100) est un finisseur routier et l'appareil de travail est au moins un dispositif parmi l'entraînement (156) du finisseur routier, la trémie (101) permettant de recevoir le matériau utilisé pour la construction de routes, des bandes racleuses (151) permettant de transporter le matériau depuis la trémie jusqu'à une vis de distribution (155), une table de pose (102), un chauffage (152) pour la table de pose (102) ou un cylindre de nivellement (154) permettant d'ajuster un point d'attache (157) de la table de pose, dans lequel au moins un capteur (111, 121, 122, 123) mesure un paramètre de fonctionnement de l'appareil de travail.
